# EUROPEAN PATENT APPLICATION

(11) **EP 0 864 501 A2**
(43) Date of publication of application: **16.09.1998**
(21) Application number: 98301567.8
(22) Date of filing: 03.03.1998
(51) Int. Cl.: B65B 69/00

(54) **Method and apparatus for opening a package**

(30) Priority: 07.03.1997 JP 70368/97; 16.07.1997 JP 208507/97; 22.10.1997 JP 309195/97
(71) Applicant: Baldwin-Japan Ltd., Tokyo (JP)
(72) Inventor: Hara, Akira, Meguro-ku, Tokyo (JP); Yamabe, Iwao, Edogawa-ku, Tokyo (JP); Takagi, Toshisaburo, Urawa-shi, Saitama (JP)
(74) Representative: Jacob, Reuben Ellis

(57) **Abstract**

There is disclosed a method of opening a package including a content wrapped with a wrapper. The method comprises the step of directing a laser beam to the wrapper for cutting the wrapper with the laser beam to open the package. The method further comprises the step of protecting the content from being damaged by the laser beam. Also disclosed is apparatus for opening a said package including a laser beam source, and a package to be opened using said apparatus.

## Description

The invention relates to a method of opening a package including a content wrapped with a wrapper. The content may comprise a roll including a web of paper wound thereon to form multi-layers, or sheets of paper stacked into multi-layers. The web or sheets may be adapted to be printed or converted. In addition, the invention relates to the structure of the package. The invention further relates to an apparatus for opening the package.

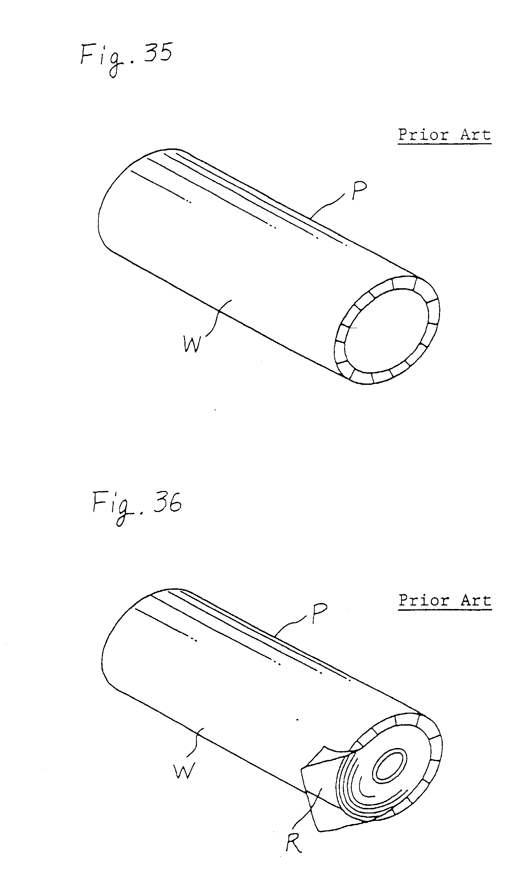

There has been generally used a roll R including a web of paper wound thereon to form multi-layers, for example in a web-fed press for newspaper or magazine, as shown in Fig. 35 and Fig. 36. The roll R is wrapped with a wrapper W for transportation and storage to form a package P including the roll R therein. The wrapper W keeps the roll R from being damaged. Accordingly, first of all, it is required to cut the wrapper W circumferentially of the package P at the opposite end portions thereof and then cut the wrapper W axially of the package P, to open the package P. The roll R is taken out of the package P and mounted on the web-fed press. The web of paper is fed from the roll R and printed by the web-fed press.

As to the operation to open the package P, it is conventional to manually out the wrapper W with a knife and a bamboo spatula. An operator manipulates the knife at the opposite end portions of the package P to cut the wrapper W circumferentially of the package P. The operator then inserts the bamboo spatula between the wrapper W and the roll R at one of the opposite end portions of the package P and move the bamboo spatula axially of the package P, to out the wrapper W axially of the package P.

However, the roll R is very heavy. In addition, the wrapper W generally comprises a wrapping paper which is durable and strong. The wrapping paper is closely fitted on the outer surface of the roll R. It is therefore troublesome to manually and conveniently cut the wrapper W with the knife and the bamboo spatula. Labour and time are required. It has also been a problem that the roll R may be damaged by the bamboo spatula inserted between the wrapper W and the roll R and moved axially of the package P. It is a task of extreme difficulty to manually and conveniently cut the wrapper W to open the package P, without damage to the roll R.

There has been heretofore proposed an apparatus for automatically cutting the wrapper to open the package, as disclosed in Japanese Laid-Open Patent Publication No. 311, 438 of 1992. The apparatus includes a knife having a portion of T-shaped cross section and equipments for inserting the knife between the wrapper and the roll and moving the knife axially of the package, to out the wrapper axially of the package. However, the equipments are complicated and expensive. It takes much time to open the package. It has also been a problem that the knife is liable to be worn and damaged by the durable and strong wrapping paper. It is therefore required to frequently exchange the knife for new one.

There has been also used sheets of paper stacked into multi-layers, in the sheet-fed press. The sheets are wrapped with a wrapper for transportation and storage to form a package including the sheets therein, like the roll of web. Accordingly, it is required to cut the wrapper to open the package.

As to the web and sheets to be converted by a paper converting machine, it is also required to cut the wrapper to open the package.

It is therefore an object of the invention to provide a new and improved method of opening a package including a content wrapped with a wrapper, and an apparatus therefore, to thereby overcome the above problems.

Another object of the invention is to conveniently cut the wrapper and open the package, without damage of the content.

Other object of the invention is to conveniently cut the wrapper and open the package, without complicated and expensive equipments.

Other object of the invention is to conveniently cut the wrapper and open the package, without taking much time.

Other object of the invention is to conveniently cut the wrapper and open the package, without the problem relating to the wear and damage of knife.

According to the invention, there is provided a method of opening a package including a content wrapped with a wrapper. The method comprises the step of directing a laser beam to the wrapper for cutting the wrapper with the laser beam to open the package. The method further comprises the step of protecting the content from being damaged by the laser beam.

According to a further aspect of the invention, there is also provided a package to be opened. The package comprises a covering layer of material having a laser beam absorptivity which is lower than that of the wrapper. The covering layer may be interposed between the wrapper and the content for covering the content from the laser beam to protect the content from being damaged by the laser beam.

The material may be coated on or impregnated into the inner surface of the wrapper to form the covering layer.

The material may be coated on or impregnated into the outer surface of the content to form the covering layer.

In another embodiment, the content is of multi-layers. The covering layer is interposed between the layers of the content adjacent to the outer surface of the content for covering the content from the laser beam to protect the content from being damaged by the laser beam.

In another embodiment, the material may be coated on or impregnated into at least one layer of the content adjacent to the outer surface to form the covering layer.

The content may comprise a roll including a web of paper wound thereon to form multi-layers, or sheets of paper stacked into multi-layers. The web or sheets may be adapted to be printed or converted. The wrapper may be made of paper, plastic film or fabric.

The covering layer may be formed of a foil of metal.

The covering layer may extend substantially all over the circumference of the content.

The covering layer may comprise an elongate strip. The package may be intended for the wrapper to be cut with the laser beam along the strip.

In another embodiment, the step of protecting the content comprises the step of utilizing a type of laser beam not capable of cutting the web or sheets. The wrapper comprises a wrapping paper having a laser beam absorptivity which is higher than that of the web or sheets with respect to the type of laser beam to cut the wrapping paper and open the package with the laser beam.

In a further embodiment, the wrapping paper may include a material admixed thereinto and having a high absorptivity with respect to the type of laser beam.

The method may further comprise the step of moving the package relative to the laser beam.

In a preferred embodiment, the package is cylindrical. The step of moving the package comprises the step of rotatingly moving the package about the central axis thereof for cutting the wrapper circumferentially of the package at the opposite end portions of the package. The step of moving the package further comprises the step of linearly moving the package axially thereof for cutting the wrapper in the axial direction of the package.

The step of moving the package may comprise the step of linearly moving the package axially thereof while rotatingly moving the package about the central axis thereof for cutting the wrapper spirally.

In another embodiment, the method further comprises the step of sweeping the laser beam over the package which is held in position.

The step of sweeping the laser beam may comprise the step of linearly sweeping the laser beam axially of the package for cutting the wrapper in the axial direction of the package.

According to a further aspect of the invention there is also provided an apparatus for opening a package. The apparatus comprises support means for supporting the package thereon at a fixed position. The apparatus further comprises a laser beam source for directing a laser beam to the wrapper and linearly sweeping the laser beam over the wrapper to cut the wrapper with the laser beam in the axial direction of the package.

In another embodiment, the apparatus further comprises guide means adapted to guide the support means for linear movement axially of the package to cut the wrapper with the laser beam in the axial direction of the package.

In case of the package which is cylindrical, the support means may include guide means for guiding the package for rotational movement about the central axis thereof on the support means while directing the laser beam to the wrapper, to cut the wrapper circumferentially of the package at the opposite end portions of the package.

The support means may include first drive means for rotatingly moving the package about the central axis thereof on the support means while directing the laser beam to the wrapper, to cut the wrapper circumferentially of the package at the opposite end portions of the package. The apparatus may further comprise second drive means for linearly moving the support means axially of the package to cut the wrapper with the laser beam in the axial direction of the package.

In connection to the covering layer interposed between the content and the wrapper or between the layers of the content adjacent to the outer surface of the content, the apparatus may further comprise detector means for detecting the covering layer, and control means for controlling the first and second drive means in response to a signal from the detector means to direct the laser beam to the package at the position of the covering layer.

In another embodiment, the roll includes a web of paper wound thereon and an adhesive double coated tape which includes two adhesive layers formed on the opposite sides thereof and a release agent double coated paper adhered to one of the adhesive layers, the other adhesive layer being adhered to the end of the web. The adhesive double coated tape further includes a covering layer of material having a laser beam absorptivity which is lower than that of the wrapper for covering the roll from the laser beam to protect the roll from being damaged by the laser beam.

The adhesive double coated tape may be adhered to the end of the web all over the width thereof.

There is also provided an adhesive double coated tape comprising an elongate substrate. Two adhesive layers are formed on the opposite sides of the substrate. A release agent double coated paper is adhered to one of the adhesive layers. A covering layer is formed on one of the opposite sides of the release agent double coated paper, the covering layer being of material having a low absorptivity with respect to a type of laser beam.

The covering layer may be formed on one of the opposite sides of the substrate.

The type of laser beam may comprise CO₂ laser beam. The covering layer may comprise 2 foil of metal such as aluminum.

The covering layer may be adhered to one of the opposite sides of the release agent double coated paper or the substrate.

The covering layer may be coated on one of the opposite sides of the release agent double coated paper or the substrate.

The covering layer may be vapour deposited on one of the opposite sides of the release agent double coated paper or the substrate.

The adhesive double coated tape may comprise an elongate substrate of material having a low absorptivity with respect to a type of laser beam.

The substrate may be made of metal such as aluminum.

In a preferred embodiment, the elongate substrate includes a portion weakened to be torn along a straight tearing line extending longitudinally of the substrate adjacent to one edge thereof. The substrate is free from one of the adhesive layers at least between the tearing line and the one edge of the substrate. An elongate void is formed in and clear of the other adhesive layer along the tearing line.

Fig. 1 is a perspective view of a package including a content wrapped with a wrapper according to the invention, the content comprising a roll including a core about which a web of paper is wound to form multi-layers.

Fig. 2 is a perspective view of the package of Fig. 1 in which an end paper is removed and the wrapper is partially broken to show the web and the core.

Fig. 3 is a perspective view of a package in which the wrapper is partially broken to show a covering layer interposed between the wrapper and the roll in a preferred embodiment of the invention.

Fig. 4 is a side view of the package of Fig. 3.

Fig. 5 is a cross sectional view of the package of Fig. 3.

Fig. 6 is a cross sectional view of a package including a covering layer interposed between the layers of web adjacent to the outer surface of the roll in another embodiment.

Fig. 7 is an elevational view of an apparatus for opening the package in a preferred embodiment of the invention.

Fig. 8 is a side view of the apparatus of Fig. 7.

Fig. 9 to Fig. 12 are explanatory views showing the steps of opening the package in the apparatus of Fig. 7, respectively.

Fig. 13 is a perspective view of a package including a content wrapped with a wrapper according to the invention, the content comprising sheets of paper stacked into multi-layers.

Fig. 14 is a plan and sectional view of the package of Fig. 13.

Fig. 15 is a side and sectional view of the package of Fig. 13.

Fig. 16 is an explanatory view showing the step of opening the package in a preferred embodiment of the invention.

Fig. 17 is an explanatory view showing the step of opening the package in another embodiment.

Fig. 18 is a perspective view showing a roll including a web of paper wound thereon and an adhesive double coated tape adhered to the end of the web in a preferred embodiment of the invention.

Fig. 19 is a cross sectional view of the roll and the adhesive double coated tape of Fig. 18.

Fig. 20 is a plan view of the adhesive double coated tape of Fig. 19, a release agent double coated paper being removed.

Fig. 21 is a bottom view of the adhesive double coated tape of Fig. 19.

Fig. 22 is a bottom view of a adhesive double coated tape in another embodiment.

Fig. 23 is a cross sectional view of an adhesive double coated tape in other embodiment.

Fig. 24 is a cross sectional view of an adhesive double coated tape in other embodiment.

Fig. 25 is 2 cross sectional view of an adhesive double coated tape in other embodiment.

Fig. 26 is a cross sectional view of an adhesive double coated tape in other embodiment.

Fig. 27 is an explanatory view showing the step of opening a package including the roll and the adhesive double coated tape.

Fig. 28 is an explanatory view showing the release agent double coated paper removed from the adhesive layer of the adhesive double coated tape of Fig. 27.

Fig. 29 is an explanatory view showing another web of paper adhered to the adhesive layer of the adhesive double coated tape of Fig. 28.

Fig. 30 to Fig. 34 are explanatory views showing the steps of joining two webs of paper together, respectively.

Fig. 35 is a perspective view of a package in prior art.

Fig. 36 is a perspective view of the package of Fig. 35 in which an end paper is removed and a wrapper is partially broken to show a roll wrapped with a wrapper.

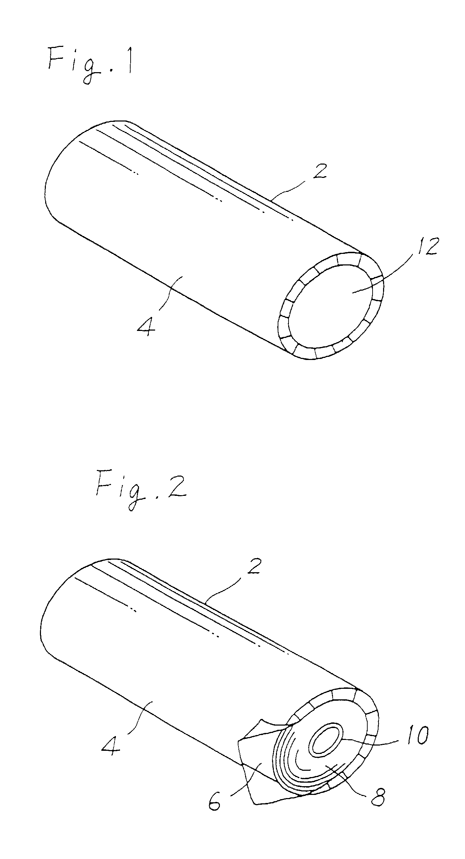

Turning now to the drawings, Fig. 1 illustrates a package 2 including a content wrapped with a wrapper 4, according to the invention. The package 2 is cylindrical. The content comprises a roll 6 including a web of paper 8 wound thereon to form multi-layers, as shown in Fig. 2. In the embodiment, the roll 6 includes a core 10 about which the web of paper 8 is wound. The web of paper 8 is adapted to be printed or converted. The wrapper 4 comprises a wrapping paper which is durable and strong. The wrapping paper is closely fitted on the outer surface of the roll 6 and folded along the opposite end surfaces of the roll 6. Two end papers 12 are adhered to the folded portions of the wrapping paper to cover the opposite end surfaces of the roll 6. The wrapper 4 may be made of plastic film or fabric.

The package is intended such that a laser beam can be directed to the wrapper 4 for cutting the wrapper 4 with the laser beam. In addition, the package 2 is arranged to protect the roll 6 from being damaged by the laser beam.

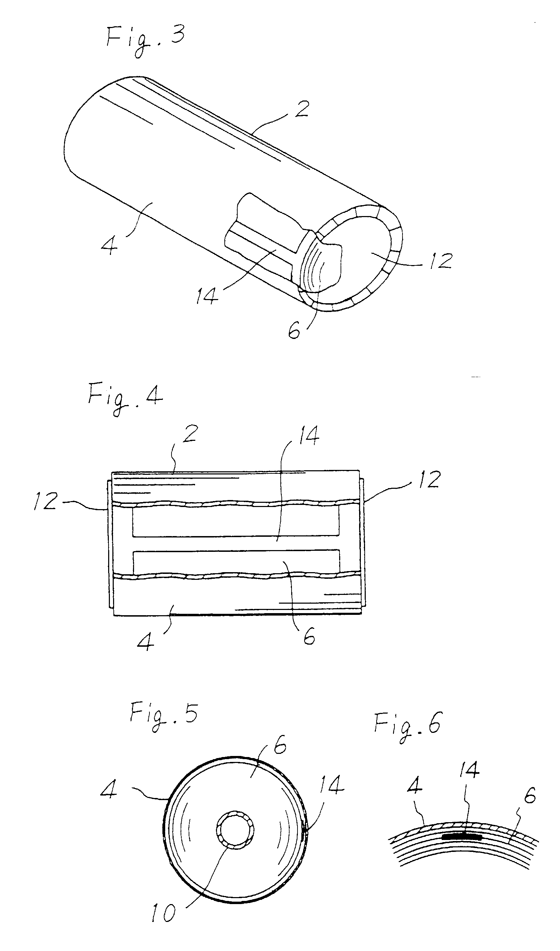

In this connection, in a preferred embodiment of the invention shown in Fig. 3 to Fig. 5, the package 2 includes a intercepting or covering layer 14 of material having a laser beam absorptivity which is lower than that of the wrapper 4. The covering layer 14 is interposed between the wrapper 4 and the roll 6 for intercepting the laser beam between the wrapper 4 and the roll 6. The covering layer 14 therefore covers the roll 6 from the laser beam to protect the roll 6 from being damaged by the laser beam.

The laser beam may comprise CO₂ laser beam which can cut the wrapper 4 made of paper, plastic film or fabric. The covering layer 14 may be formed of a foil of metal such as aluminum. The foil may be adhered or bonded to the inner surface of the wrapper 4 to form the covering layer 14. The foil may be adhered or bonded to the outer surface of the roll 6 to form the covering layer 14. Metal has a laser beam absorptivity which is lower than that of the wrapper 4 with respect to CO₂ laser beam. Accordingly, the covering layer 14 can cover the roll 6 from the laser beam to protect the roll 6 from being damaged by the laser beam.

An experiment has been made on the roll 6 wrapped with duplicated wrapping papers each having a thickness of 0.1 mm, and the foil of aluminum having a thickness of 0.05 mm and interposed between the duplicated wrapping papers and the roll 6. The experiment has swept a laser beam over the duplicated wrapping papers at a speed of 3 m/sec. It has merely cut the duplicated wrapping papers. The roll 6 has been not damaged at all.

The covering layer 14 may be formed of a material including a powdered metal admixed thereinto. The material may be coated on or impregnated into the inner surface of the wrapper 4 to form the covering layer 14. The material may be coated on or impregnated into the outer surface of the roll 6 to form the covering layer 14. The material may be impregnated into a fabric adhered or bonded to the inner surface of the wrapper 4 or the outer surface of the roll 6 to form the covering layer 14.

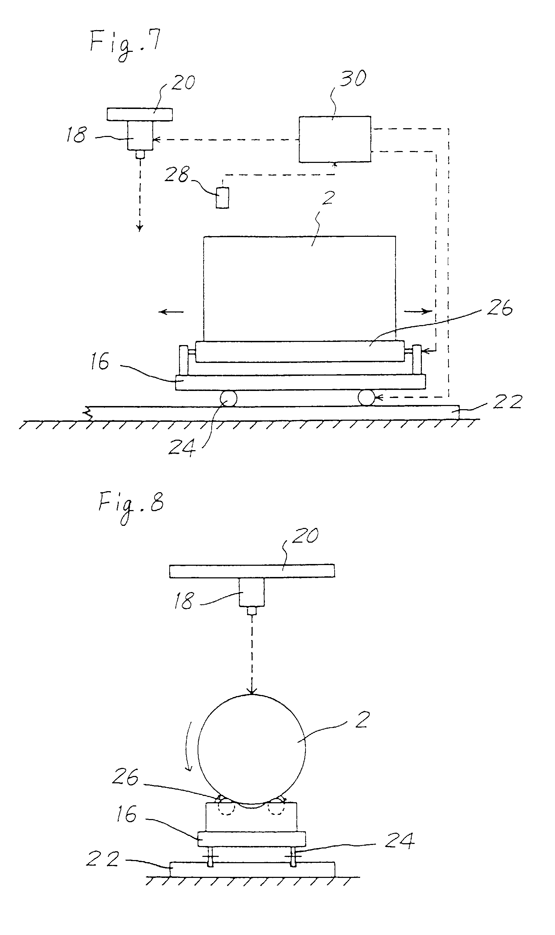

The covering layer 14 may be interposed between the layers of the web adjacent to the outer surface of the roll 6, as shown in Fig. 6, for covering the roll 6 from the laser beam to protect the roll 6 from being damaged by the laser beam. In the embodiment, the material may be coated on or impregnated into at least one layer of the roll 6 adjacent to the outer surface of the roll 6 to form the covering layer 14.

In addition, the covering layer 14 may comprise an elongate strip which includes a straight portion extending axially of the package 2, as shown in Fig. 3 and 4. The strip further includes two annular portions extending circumferentially of the package 2 at the opposite end portions of the package 2. The package 2 is intended so that the wrapper 4 can be cut with the laser beam along the strip.

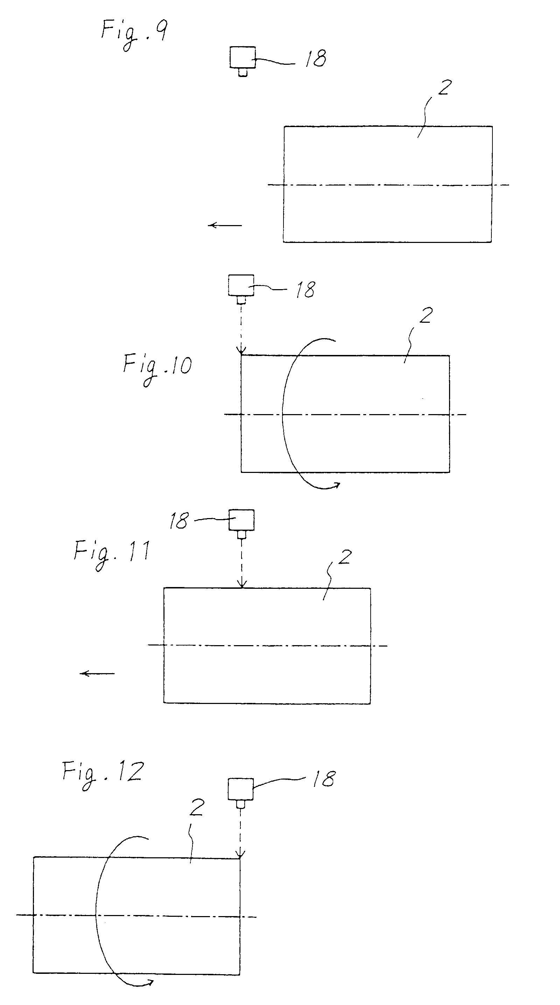

Fig. 7 and Fig. 8 illustrate an apparatus for opening the package 2, acccording to the invention. The apparatus includes support means comprising a carriage 16 for supporting the package 2 thereon. The apparatus further includes a laser beam source 18 mounted on a frame 20 for directing a laser beam to the wrapper 4. In addition, the apparatus includes guide means comprising a guide bed 22 for guiding the carriage 16 for linear movement axially of the package 2. In the embodiment, the carriage 16 includes wheels 24 which are fitted in and rolled along grooves formed in the guide bed 22 to guide the carriage 16 for linear movement axially of the package 2. The carriage 16 further includes guide means comprising rollers 26 between which the package 2 is supported for guiding the package 2 for rotational movement about the central axis thereof on the carriage 16.

In the apparatus, an operator can linearly move the carriage 16 along with the package 2 axially of the package 2 to position one of the opposite end portions of the package 2 below the laser beam source 18, as shown in Fig. 9 and Fig. 10. The operator then rotatingly moves the package 2 about the central axis thereof and operates the laser beam source 18 for directing the laser beam to the wrapper 4, to cut the wrapper 4 circumferentially of the package 2 at one of the end portions of the package 2. The covering layer 14 includes two annular portions extending circumferentially of the package 2 at the opposite end portions of the package 2, as described previously, so that the operator can cut the wrapper 4 with the laser beam along the annular portion of the covering layer 14. The covering layer 14 therefore covers the roll 6 from the laser beam to protect the roll 6 from being damaged by the laser beam.

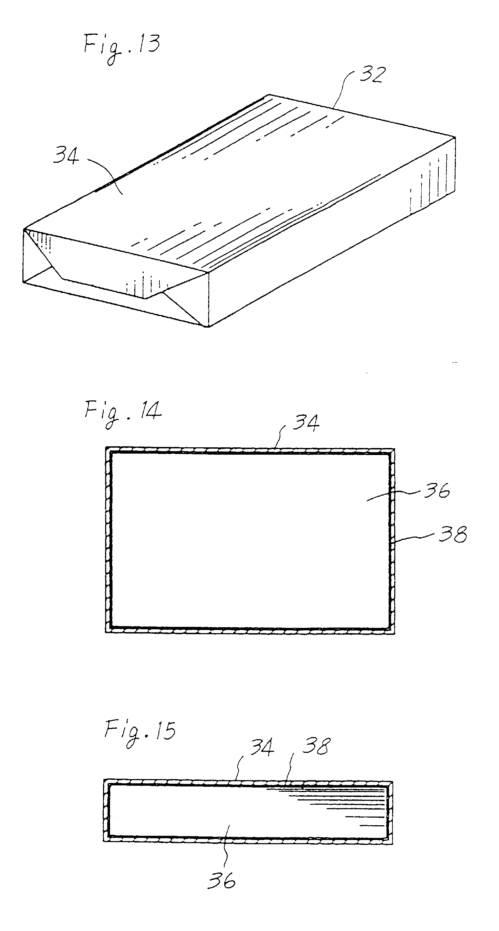

The operator then linearly moves the carriage 16 along with the package 2 axially of the package 2 while directing the laser beam to the wrapper 4, as shown in Fig. 11, to cut the wrapper 4 with the laser beam in the axial direction of the package 2. The covering layer 14 includes a straight portion extending axially of the package 2, as described previously, so that the operator can position the straight portion of the covering layer 14 below the laser beam source 18 to cut the wrapper 4 with the laser beam along the straight portion of the covering layer 14. The covering layer 14 therefore covers the roll 6 from the laser beam to protect the roll 6 from being damaged by the laser beam. The operator then positions the other end portion of the package 2 below the laser beam source 18, as shown in Fig. 12, and rotatingly moves the package 2 about the central axis thereof while directing the laser beam to the wrapper 4, to cut the wrapper 4 circumferentially of the package 2 at the other end portion of the package 2. The operator cuts the wrapper with the laser beam along the annular portion of the covering layer 14 so that the covering layer 14 covers the roll 6 from the laser beam to protect the roll 6 from being damaged by the laser beam.

Accordingly, two annular cut lines are formed at the opposite end portions of the package 2 by the laser beam. In addition, a straight cut line is formed between the annular cut lines by the laser beam. The wrapper 4 can therefore be partially removed from the opposite end portions of the package 2 along the annular cut lines. The operator then engages a tool with the edge of the wrapper 4 formed by the straight cut line and rotatingly moves the package 2 about the central axis thereof, to peel the wrapper 4 off the roll 6.

The apparatus therefore can conveniently cut the wrapper 4 and open the package 2, without damage of the roll 6. It does not involve complicated and expensive equipments. In addition, it does not take much time to open the package 2. It has also not a problem relating to the wear of knife.

The roll 6 is then taken out of the package 2 and mounted on a web-fed press for newspaper or magazine. The web of paper 8 is fed from the roll 6 and printed by the web-fed press. The web of paper 8 may be converted by a paper converting machine.

The apparatus can be arranged to automatically cut the wrapper 4 and open the package 2. In the embodiment, the carriage 16 further includes first drive means not shown, but mounted on the carriage 16 and connected to the rollers 26. The apparatus further includes second drive means not shown, but mounted on the carriage 16 and connected to the wheels 24. In addition, the apparatus includes detector means 28 comprising a metal sensor for detecting the covering layer 14, and control means 30 connected to the laser beam source 18, the first and second drive means and the detector means 28.

The control means 30 controls the first and second drive means in response to a signal from the detector means 28 in such a way that the wheels 24 are firstly rotatingly driven by the second drive means to linearly move the carriage 16 axially of the package 2 to position one of the opposite end portions of the package 2 below the laser beam source 18. The rollers 26 are then rotatingly driven by the first drive means to rotatingly move the package 2 about the central axis thereof. The laser beam source 18 directs the laser beam to the wrapper 4 to cut the wrapper 4 circumferentially of the package 2 at one of the end portions of the package 2. The rollers 26 cooperate with the first drive means, the detector means 28 and the control means 30 to position the straight portion of the covering layer 14 below the laser beam source 18. The wheels 24 are then rotatingly driven by the second drive means to linearly move the carriage 16 axially of the package 2 while directing the laser beam to the wrapper 4, to cut the wrapper 4 with the laser beam in the axial direction of the package 2. Finally, the rollers 26 are rotatingly driven again by the second drive means to cut the wrapper 4 circumferentially of the package 2 at the other end portion of the package 2. This can automatically cut the wrapper 4 and open the package 2.

In the apparatus in Fig. 7 and Fig. 8, the wheels 24 and the rollers 26 may be rotatingly moved, to linearly move the package 2 axially thereof while rotatingly moving the package 2 about the central axis thereof for cutting the wrapper 4 spirally. In this connection, the covering layer 14 may include a spiral portion extending axially of and about the package 2 to cut the wrapper 4 with the laser beam along the spiral portion of the covering layer 14. The covering layer 14 may extend substantially all over the circumference of the roll 6.

The apparatus may be arranged to sweep the laser beam over the package 2 which is held in position, to thereby open the package 2. For example, the apparatus may be arranged to rotatingly move the package 2 about the central axis thereof relative to the laser beam for cutting the wrapper 4 circumferentially of the package 2 at the opposite and portions of the package 2, and then linearly sweep the laser beam axially of the package for cutting the wrapper 4 in the axial direction of the package 2.

In the embodiment shown in Fig. 13 to Fig. 15, a package 32 includes a content wrapped with a wrapper 34, the content comprising sheets of paper 36 stacked into multi-layers. The sheets of paper 36 are adapted to be printed or converted. The package 32 further includes a covering layer 38 of material having a laser beam absorptivity which is lower than that of the wrapper 34, like the covering layer 14 and the wrapper 4 in Fig. 3. The covering layer 38 is interposed between the wrapper 34 and the sheets of paper 36 to extend substantially all over the circumference of the sheets of paper 36. The covering layer 38 may be adhered or bonded to the inner surface of the wrapper 34 or outer surface of the sheets of paper 36. The material may be coated or impregnated into the inner surface of the wrapper 34 or the outer surface of the sheets of paper 36, to form the covering layer 38.

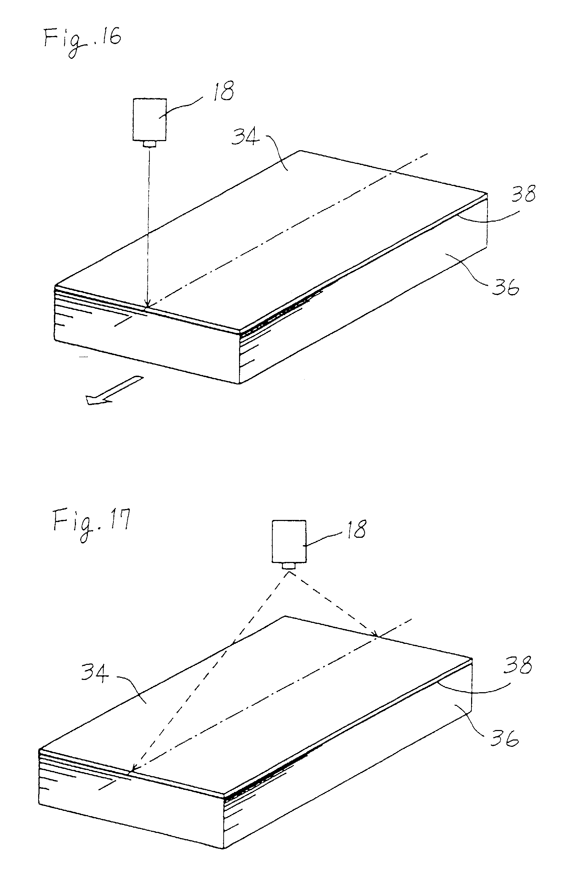

The package 32 is intended to linearly move the package 32 longitudinally thereof and direct the laser beam to the wrapper 34 from the laser beam source 18, as shown in Fig. 16, to cut the wrapper 34 and open the package 32. The covering layer 38 covers the sheets of paper 36 from the laser beam to protect the sheets of paper 36 from being damaged by the laser beam.

The laser beam source 18 may include a reflector for reflecting the laser beam toward the wrapper 34. The laser beam source 18 may further include means for rotatingly moving the reflector to sweep the laser beam over the package 32 which is held in position, as shown in Fig. 17. This embodiment can cut the wrapper 34 and open the package 32, without moving the package 32.

As to the package 2 in Fig. 1, it may be arranged to cut the wrapper 4 and open the package 2 with a type of laser beam such as YGA laser beam which is not capable of cutting the web of paper 8. In a preferred embodiment, the wrapper 4 comprises a wrapping paper which includes carbon admixed thereinto. Carbon may be admixed into the wrapping paper in a paper making step. Carbon has a high absorptivity with respect to the type of the laser beam such as YGA laser beam. Accordingly, the wrapping paper has a laser beam absorptivity which is higher than that of the web of paper 4 with respect to the type of the laser beam. It therefore can cut the wrapper 4 and open the package 2 with the type of laser beam. It also can protect the web of paper 8 from being cut or damaged by the laser beam. The wrapping paper may include a material other than carbon, admixed thereinto and having a high absorptivity with respect to the type of laser beam.

As to the package 32 in Fig. 13, the wrapper 34 may also comprise a wrapping paper which includes a material such as carbon admixed thereinto and having a high absorptivity with respect to the type of laser beam such as YGA laser beam, so that the wrapping paper has a laser beam absorptivity which is higher than that of the sheets of paper 36 with respect to the type of the laser beam. This can cut the wrapper 34 and open the package 32 with the type of laser beam, and protect the sheets of paper 36 being damaged by the laser beam, even if no covering layer 38 is interposed between the wrapper 34 and the sheets of paper 36.

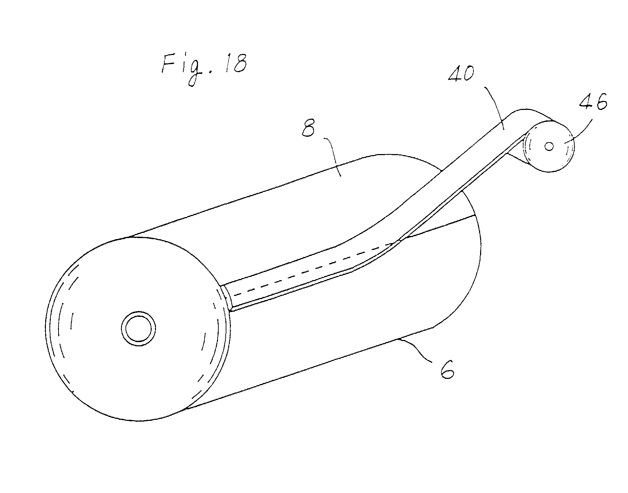

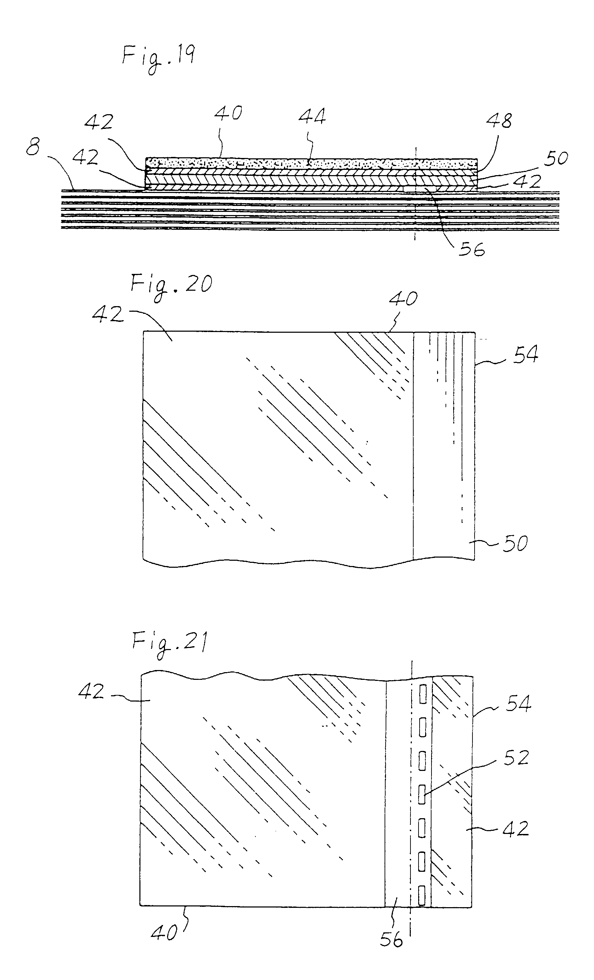

In the embodiment shown in Fig. 18, the package 2 includes a content wrapped with a wrapper 4, the content comprising the roll 6 including the web of paper 8 wound thereon and an adhesive double coated tape 40 which includes two adhesive layers 42 formed on the opposite sides thereof, as shown in Fig. 19. A release agent double coated paper 44 is adhered to one of the adhesive layers 42. The adhesive double coated tape 40 is drawn and supplied from a roll 46 of tape to extend axially of the roll 6, the other adhesive layer 42 being adhered to the end of the web 8. In the embodiment, the adhesive double coated tape 40 is adhered to the end of web 8 all over the width thereof between the opposite end surfaces of the roll 6, and cut into a length at the position of the end surface of the roll 6. The roll 6 and the adhesive double coated tape 40 thereon are then wrapped with the wrapper 4.

The adhesive double coated tape 40 further includes a covering layer 48 of material having a laser beam absorptivity which is lower than that of the wrapper 4 for covering the roll 6 from the laser beam to protect the roll 6 from being damaged by the laser beam. The covering layer 48 is formed on one of the opposite sides of the release agent double coated paper 44. The covering layer 48 is of material having a low absorptivity with respect to a type of laser beam.

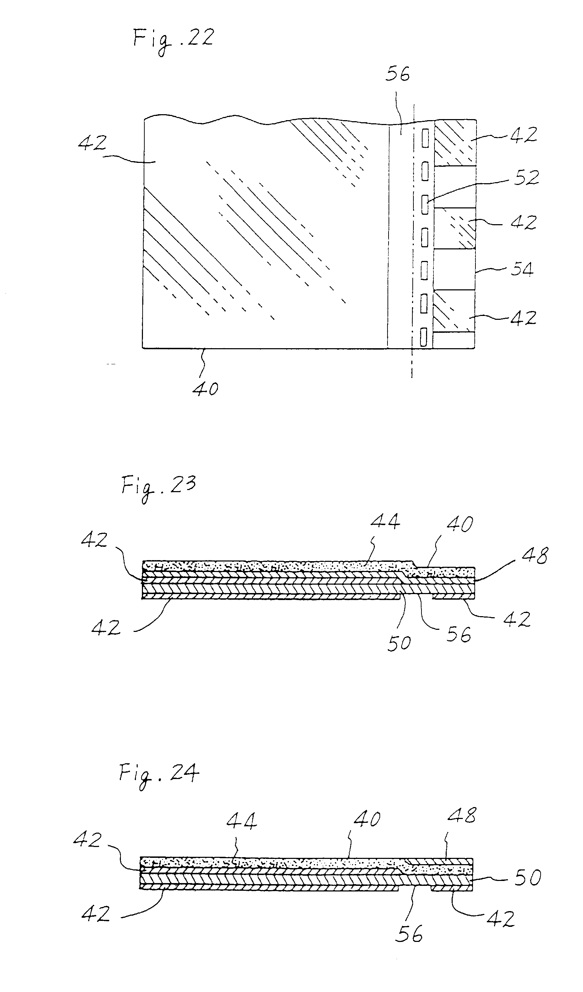

In the embodiment, the adhesive double coated tape 40 has a width of about 10 cm, and extends between the end of the web 8 and the outer surface of the roll 6. The adhesive double coated tape 40 is adhered to the end of the web 8 and the outer surface of the roll 6 to join the end of the web 8 and the outer surface of the roll 6. In addition, the adhesive double coated tape 40 includes an elongate substrate 50 made of paper, fabric or plastic film, the adhesive layers 42 being formed on the opposite sides of the substrate 50. The substrate 50 includes a portion weakened by perforations 52 to be torn along a straight tearing line extending longitudinally of the substrate 50 adjacent to one edge 54 thereof, as shown in Fig. 21. The substrate 50 is free from one of the adhesive layers 42 on the outer side of the substrate 50 at least between the tearing line having the perforations 52 and the one edge 54 of the substrate 50, as shown in Fig. 20. The covering layer 48 is formed on the inner side of the release agent double coated paper 44 to have a width of about 3 cm, in stead of the adhesive layer 42. In addition, an elongate void 56 is formed in and clear of the other or inner adhesive layer 42 along the tearing line, at a distance of about 1.5 cm from the one edge 54 of the substrate 50. The void 56 has a width of about 1.5 cm. The other adhesive layer 42 is adhered to the end of the web 8 and the outer surface of the roll 6 to position the void 56 between the end of the web 8 and the outer surface of the roll 6.

The adhesive layers 42 may include portions formed between the one edge 54 of the substrate 50 and the void 56 and spaced from each other at a distance in the longitudinal direction of the adhesive double coated tape 40, as shown in Fig 22.

The covering layer 48 may be formed all through the inner side of the release agent double coated paper 44, as shown in Fig. 23. In the embodiment, the covering layer 48 includes a release agent coated on the inner side thereof which is adhered to the outer adhesive layer 42 of the substrate 50.

The covering layer 48 may be formed on the outer side of the release agent double coated paper 44, as shown in Fig. 24, to have a width of about 3 cm, in the portion free from one one of the adhesive layers 42 on the outer side of the substrate 50. The covering layer 48 includes a release agent coated on the outer surface thereof.

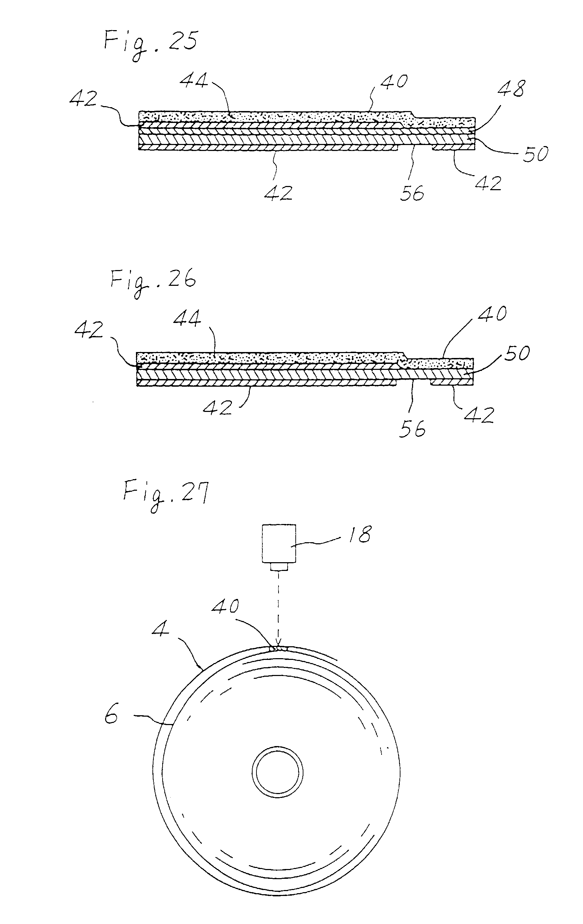

The covering layer 48 may be formed on the outer side of the substrate 50, as shown in Fig. 25. The outer adhesive layer 42 is formed on the covering layer 48, the release agent double coated paper 44 being adhered to the outer adhesive layer 42.

The package 2 may be intended for the direction of a type of laser beam comprising CO₂ laser beam, to the wrapper 4. In this case, the covering layer 48 may comprise a foil or metal such as aluminium.

The covering layer 48 may be adhered to one of the opposite sides of the release agent double coated paper 44 or the substrate 50. The covering layer 48 may be coated on one of the opposite sides of the release agent double coated paper 44 or the substrate 50. The covering layer 48 may be vapour deposited on one of the opposite sides of the release agent double coated paper 44 or the substrate 50.

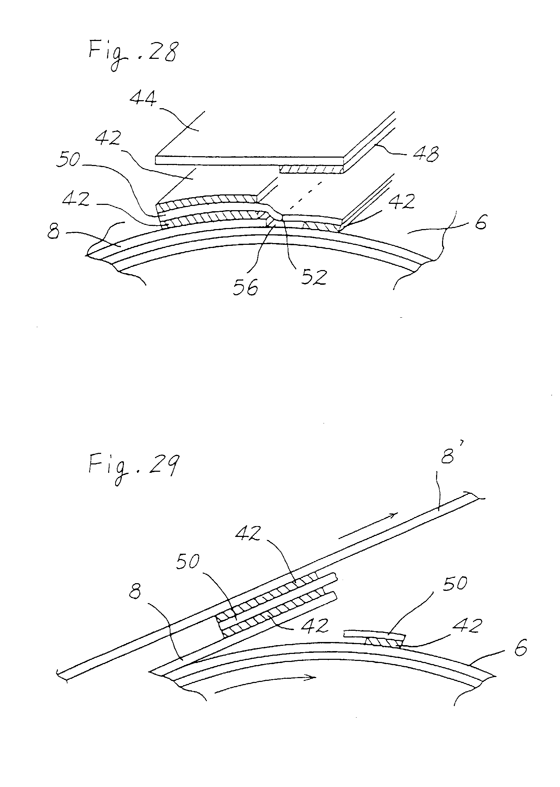

The adhesive double coated tape 40 may include an elongate substrate 50 of material having a low absorptivity with respect to a type of laser beam, as shown in Fig. 26, for covering the roll 6 from the laser beam to protect the roll 6 from being damaged by the laser beam, without the covering layer 48. The package 2 may be intended for the direction of a type of laser beam comprising CO₂ laser beam, to the wrapper 4. The substrate 50 may be made of metal such as aluminium.

The laser beam source 18 is arranged to direct the laser beam to the wrapper 4 along the adhesive double coated tape 40, as shown in Fig. 27, to cut the wrapper 4 and open the package 2. The covering layer 48 covers the roll 6 from the laser beam. In the embodiment shown in Fig. 26, the substrate 50 covers the roll 6 from the laser beam.

The roll 6 can therefore be taken from the package 2. An operator then peels the release agent double coated paper 44 off the adhesive layer 42 of the substrate 50, as shown in Fig. 28.

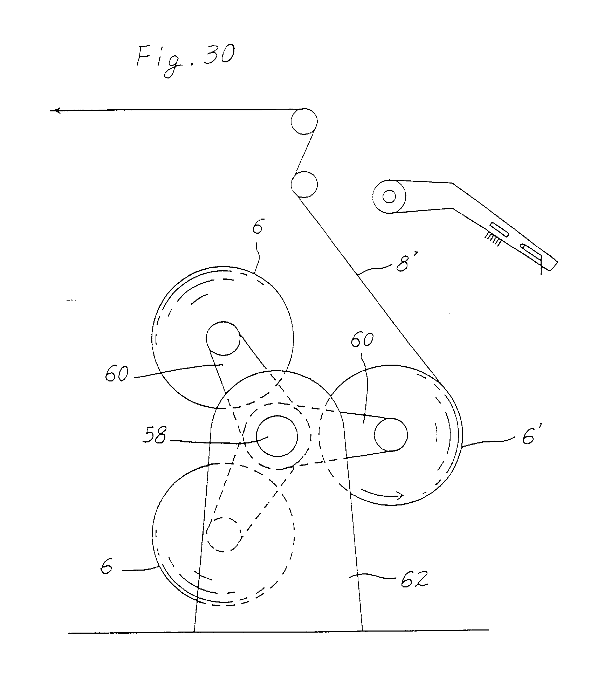

The web of paper 8 is intended to be printed in a web-fed press. The web of paper 8 may be intended to be converted in a converting machine. The web-fed press or converting machine includes an apparatus for feeding the web of paper 8, the roll 6 being mounted on the apparatus. In the apparatus, another web of paper 8' is adhered to the adhesive layer 42 of the adhesive double coated tape 40 to join the two webs of paper 8, 8' together, as shown in Fig. 29. The substrate 50 is then torn along the tearing line having the perforations 52 by a tension in the webs of paper 8, 8' when the webs of paper 8, 8' are fed.

Fig. 30 illustrates the apparatus for feeding the web of paper 8, 8'. The apparatus comprises a shaft 58 including three reel arms 60 and supported on side frames 62 for rotation. The reel arms 60 each includes roll 6, 6' mounted at the end thereof for rotation, the web of paper 8' being fed from the roll 6'.

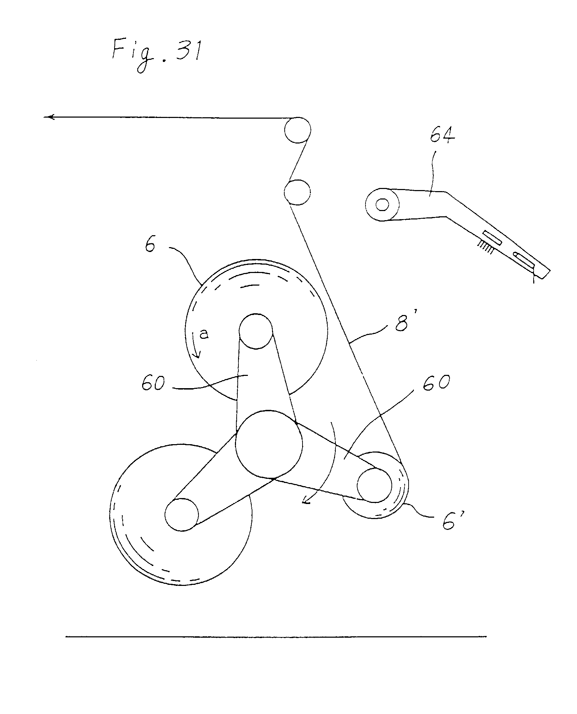

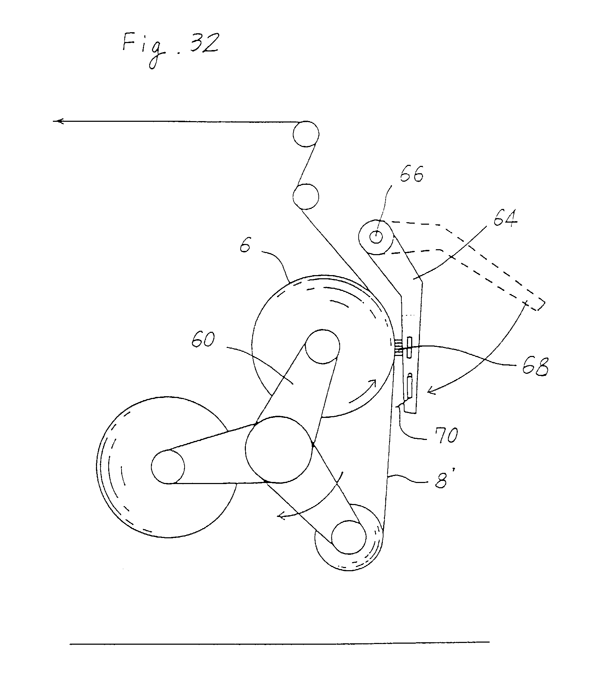

The apparatus further includes drive means connected to the shaft 58 for swingingly moving the reel arms 60 clockwise about the shaft 58 when the roll 6' decreases in diameter, as shown in Fig. 31, so that the roll 6 approaches the web of paper 8' from the roll 6'. The apparatus further includes drive means for rotatingly moving the roll 6 counterclockwise about the central axis thereof. A sensor detects if the residual of the web of paper 8' decreases to a small amount on the roll 6', to generate a signal. The drive means swingingly moves the reel arms 60 again in response to the signal from the sensor, so that the roll 6 engages with the web of paper 8', as shown in Fig. 32.

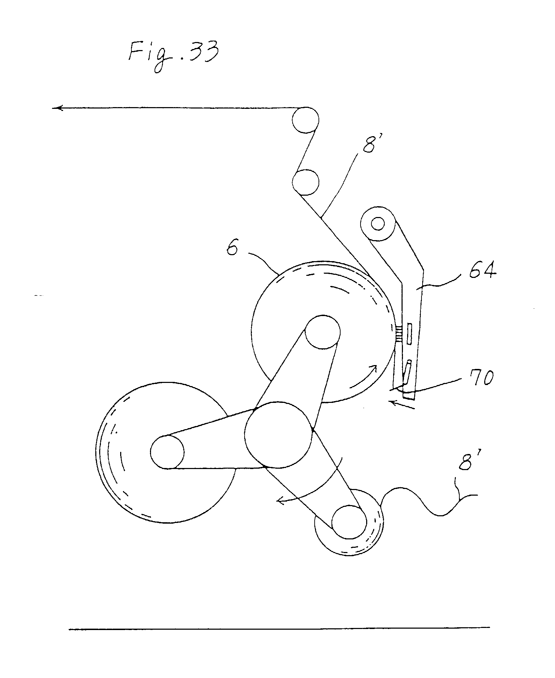

The apparatus further includes drive means for swingingly moving a paster arm 64 clockwise about a pin 66 toward the roll 6, the paster arm 64 including a brush 68 mounted thereon, so that the web of paper 8' is pressed against the outer surface of the roll 6 by the brush 68. The web of paper 8' is therefore adhered to the adhesive double coated tape 40 on the roll 6 to join the two webs of paper 8, 8' together. The paster arm 64 further includes a knife 70 which is connected to drive means mounted on the paster arm 64. The knife 70 is pressed against the web of paper 8' by the drive means to cut the web of paper 8', immediately after joining the two webs of paper 8, 8' together, as shown in Fig. 33.

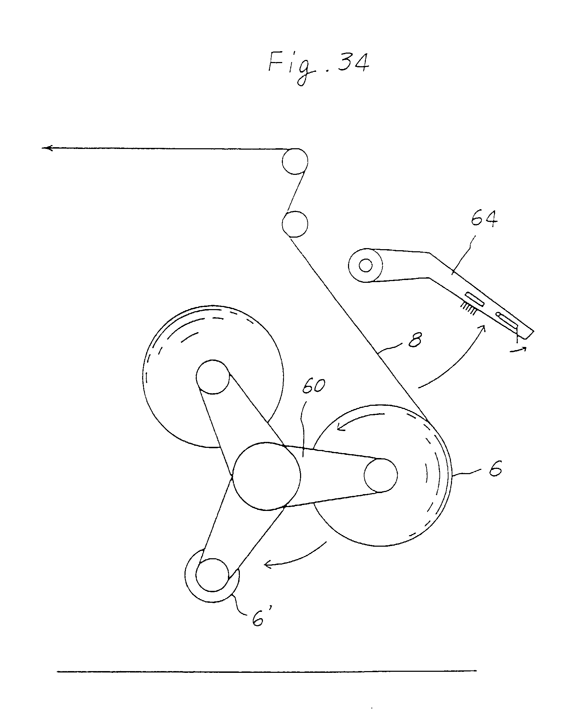

The drive means then swingingly moves the paster arm 64 back to the position in Fig 30 and swingingly moves the reel arms 60 again to the position in which the web of paper 8 is fed from the roll 6, as shown in Fig. 34.

## Claims

1. A method of opening a package including a content wrapped with a wrapper, said method comprising the steps of:
directing a laser beam to said wrapper for cutting said wrapper with said laser beam to open said package; and
protecting said content from being damaged by said laser beam.

2. The method of claim 1 wherein said content comprises a roll including a web of paper wound thereon to form multi-layers or sheets of paper stacked into multi-layers, said web or sheets being adapted to be printed or converted, and wherein said step of protecting the content comprises the step of utilizing a type of laser beam not capable of cutting said web or sheets, said wrapper comprising a wrapping paper having a laser beam absorptivity which is higher than that of said web or sheets with respect to said type of laser beam to cut said wrapping paper and open said package with said laser beam.

3. The method of claim 2, wherein said wrapping paper includes a material admixed thereinto and having a high absorptivity with respect to said type of laser beam.

4. The method of any preceding claim, further comprising the step of moving said package relative to said laser beam.

5. The method of claim 4, wherein said package is cylindrical, and wherein said step of moving said package comprises the step of rotatingly moving said package about the central axis thereof for cutting said wrapper circumferentially of said package at the opposite end portions of said package, and the step of linearly moving said package axially thereof for cutting said wrapper in the axial direction of said package.

6. The method of claim 4, wherein said package is cylindrical, and wherein said step of moving said package comprises the step of rotatingly moving said package about the central axis thereof for cutting said wrapper circumferentially of said package at the opposite end portions of said package, and the step of linearly moving said package axially thereof while rotatingly moving said package about the central axis thereof for cutting said wrapper spirally.

7. The method of any of claims 1 to 3, further comprising the step of sweeping said laser beam over said package which is held in position.

8. The method of claim 7, wherein said package is cylindrical, and further comprising rotatingly moving said package about the central axis thereof relative to said laser beam for cutting said wrapper circumferentially of said package at the opposite end portions of said package, said step of sweeping said laser beam comprising the step of linearly sweeping said laser beam axially of said package for cutting said wrapper in the axial direction of said package.

9. An apparatus for opening a package by utilizing the method of any of claims 1 to 8, said apparatus comprising:
support means for supporting said package thereon at a fixed position; and
a laser beam source for directing a laser beam to said wrapper and linearly sweeping the laser beam over said wrapper to cut said wrapper with said laser beam in the axial direction of said package.

10. An apparatus for opening a package by utilizing the method of any of claims 1 to 8, said apparatus comprising:
support means for supporting said package thereon;
a laser beam source for directing a laser beam to said wrapper; and
guide means adapted to guide said support means for linear movement axially of said package to cut said wrapper with said laser beam in the axial direction of said package.

11. The apparatus of claim 9 or 10 wherein said package is cylindrical, and wherein said support means includes guide means for guiding said package for rotational movement about the central axis thereof on said support means while directing said laser beam to said wrapper, to cut said wrapper circumferentially of said package at the opposite end portions of said package.

12. An apparatus for opening a cylindrical package by utilizing the method of any one of claims 1 to 8, said apparatus comprising:
support means for supporting said package thereon;
a laser beam source for directing a laser beam to said wrapper, said support means including first drive means for rotatingly moving said package about the central axis thereof on said support means while directing said laser beam to said wrapper, to cut said wrapper circumferentially of said package at the opposite end portions of said package; and
second drive means for linearly moving said support means axially of said package to cut said wrapper with said laser beam in the axial direction of said package.

13. The apparatus of claim 12, wherein said content is of multi-layers, and wherein said package comprises a covering layer of material having a laser beam absorptivity which is lower than that of said wrapper, said covering layer being interposed between said content and said wrapper or between the layers of said content adjacent to the outer surface of said content to cover said content from said laser beam so that said content may not be damaged by said laser beam said apparatus further comprising detector means for detecting said covering layer, and control means for controlling said first and second drive means in response to a signal from said detector means to direct said laser beam to said package at the position of said covering layer.

14. A package to be opened by utilizing the method of claim 1, said package comprising a covering layer of material having a laser beam absorptivity which is lower than that of said wrapper, said covering layer being interposed between said wrapper and said content for covering said content from said laser beam to protect said content from being damaged by said laser beam.

15. The package of claim 14, wherein said material is coated on or impregnated into the inner surface of said wrapper to form said covering layer.

16. The package of claim 14, wherein said material is coated on or impregnated into the outer surface of said content to form said covering layer.

17. A package to be opened by utilizing the method of claim 1, said package comprising a covering layer of material having a laser beam absorptivity which is lower than that of said wrapper, said content being of multi-layers, said covering layer being interposed between the layers of said content adjacent to the outer surface of said content for covering said content from said laser beam to protect said content from being damaged by said laser beam.

18. The package of claim 17, wherein said material is coated on or impregnated into at least one layer of said content adjacent to said outer surface to form said covering layer.

19. The package of any one of claims 14 to 18, wherein said content comprises a roll including a web of paper wound thereon to form multi-layers, or sheets of paper stacked into multi-layers, said web or sheets being adapted to be printed or converted, and wherein said wrapper is made of paper, plastic film or fabric.

20. The package of any one of claims 14 to 18, wherein said covering layer is formed of a foil of metal.

21. The package of any one of claims 14 to 18, wherein said covering layer extends substantially all over the circumference of said content.

22. The package of any one of claims 14 to 18, wherein said covering layer comprises an elongate strip, said package being intended to cut said wrapper with said laser beam along said strip.

23. A package to be opened by utilizing the method of claim 1, said content comprising a roll including a web of paper wound thereon and an adhesive double coated tape which includes two adhesive layers formed on the opposite sides thereof and a release agent double coated paper adhered to one of the adhesive layers, the other adhesive layer being adhered to the end of said web, said adhesive double coated tape further including a covering layer of material having a laser beam absorptivity which is lower than that of said wrapper for covering said roll from said laser beam to protect said roll from being damaged by said laser beam.

24. The package of claim 23 wherein said adhesive double coated tape is adhered to said end of the web all over the width thereof.

25. An adhesive double coated tape comprising:
an elongate substrate;
two adhesive layers formed on the opposite sides of said substrates;
a release agent double coated paper adhered to one of said adhesive layers; and
a covering layer formed on one of the opposite sides of said release agent double coated paper, said covering layer being of material having a low absorptivity with respect to a type of laser beam.

26. An adhesive double coated tape comprising:
an elongate substrate;
two adhesive layers formed on the opposite sides of said substrate;
a release agent double coated paper adhered to one of said adhesive layers; and
a covering layer formed on one of the opposite sides of said substrate, said covering layer being of material having a low absorptivity with respect to a type of laser beam.

27. The adhesive double coated tape of claim 25 or 26 wherein said type of laser beam comprises CO₂ laser beam, and wherein said covering layer comprises a foil of metal such as aluminum.

28. The adhesive double coated tape of claim 25 or 26 wherein said covering layer is adhered to one of the opposite sides of said release agent double coated paper or said substrate.

29. The adhesive double coated tape of claim 25 or 26 wherein said covering layer is coated on one of the opposite sides of said release agent double coated paper or said substrate.

30. The adhesive double coated tape of claim 25 or 26 wherein said covering layer is vapour deposited on one of the opposite sides of said release agent double coated paper or said substrate.

31. An adhesive double coated tape comprising:
an elongated substrate of material having a low absorptivity with respect to a type of laser beam;
two adhesive layers formed on the opposite sides of said substrate; and
a release agent double coated paper adhered to one of said adhesive layers.

32. The adhesive double coated tape of claim 31 wherein said type of laser beam comprises CO₂ laser beam, and wherein said substrate is made of metal such as aluminum.

33. An adhesive double coated tape comprising:
an elongate substrate including a portion weakened to be torn along a straight tearing line extending longitudinally of the substrate adjacent to one edge thereof;
two adhesive layers formed on the Opposite sides of the substrate, said substrate being free from one of the adhesive layers at least between said tearing line and said one edge of the substrate;
an elongated void formed in and clear of the other adhesive layer along said tearing line; and
a release agent double coated paper adhered to said one of the adhesive layers.
